Europäisches Patentamt

European Patent Office

Office européen des brevets

(19)

(11) Veröffentlichungsnummer: **0 669 360 A1**

(12) **EUROPÄISCHE PATENTANMELDUNG**

(21) Anmeldenummer: **94111374.8**

(22) Anmeldetag: **21.07.94**

(51) Int. Cl.⁶: **C08G 63/88**, B29C 71/04

(30) Priorität: **24.02.94 DE 4405911**

(43) Veröffentlichungstag der Anmeldung:
**30.08.95 Patentblatt 95/35**

(84) Benannte Vertragsstaaten:
**BE CH DE ES FR GB IT LI NL SE**

(71) Anmelder: **GAF-HÜLS CHEMIE GMBH**

**D-45764 Marl (DE)**

(72) Erfinder: **Kleine Homann, Walter, Dr.**
**Buchenallee 14**
**D-48249 Dülmen (DE)**
Erfinder: **Grosse-Puppendahl, Thomas**
**Flaesheimer Strasse 343**
**D-45721 Haltern (DE)**

(54) **Formkörper auf Basis hochmolekularer Polyester.**

(57) Es sollen Formkörper auf Basis von Polyestern hergestellt werden, die bei einem ausgezeichneten Eigenschaftsbild nach Ende ihres Gebrauchs wiederverwertbar sind.

Diese Aufgabe wird durch Formkörper gelöst, die durch Verformen und anschließender Behandlung mit ionisierender Strahlung von Polyestern erhalten werden, wobei die Polyester 0 bis 2,5 Mol-% Reste von 2-Butendiol-1.4 enthalten.

EP 0 669 360 A1

Rank Xerox (UK) Business Services
(3. 10/3.0 9/3.3.4)

Gegenstand der Erfindung sind Formkörper auf Basis hochmolekularer Polyester, die olefinische Doppelbindungen aufweisen.

Formkörper auf der genannten Polyesterbasis sind bekannt (EP-A-0 559 072). In der Praxis sind die in erster Linie eingesetzten langkettigen, ungesättigten Verbindungen sehr kostspielig und darüber hinaus nur äußerst schlecht zugänglich. Nachteilig ist ferner, daß die im Stand der Technik beschriebenen Formkörper nach ihrer Bestrahlung einen hohen Gelanteil aufweisen, so daß sie nicht - wie bei thermoplastischen Kunststoffen üblich - nach Gebrauch durch erneute Formgebung wiederverwendet werden können.

Eine genauere Betrachtung der EP-A-0 559 072 zeigt, daß von der Verwendung kurzkettiger ungesättigter Diole eher abgeraten wird. Dies äußert sich zum einen darin, daß langkettige ungesättigte Diole bzw. Dicarbonsäuren mit 10 bis 30 Kohlenstoffatomen ganz besonders bevorzugt sind. Zudem wird bei der Gegenüberstellung des Vergleichsbeispiels 2 und des Beispiels 5 deutlich, daß bei Verwendung kurzkettiger ungesättigter Diole die dortige Aufgabe nicht ausreichend erfüllt wird. Die Verwendung von 2-Butendiol-1.4 sollte demgegenüber noch unbefriedigendere Ergebnisse liefern.

Ein Aspekt der Aufgabe der vorliegenden Erfindung war es, Formkörper zu ermöglichen, für deren Herstellung ausschließlich leicht zugängliche und kostengünstige Monomere verwendet werden.

Ein weiterer Aspekt der Aufgabe bestand darin, Formkörper zu ermöglichen, deren Molekulargewicht durch Behandlung mit ionisierender Strahlung gezielt so erhöht werden kann, daß der Gelanteil klein bleibt und die Formkörper daher nach Gebrauch durch erneute Formgebung wiederverwendet werden können.

Die Formkörper sollten zudem eine deutlich erhöhte Wärmeformbeständigkeit besitzen.

Schließlich sollten die Formkörper eine substantielle Verbesserung der Zugfestigkeit aufweisen, ohne daß die Schlagzähigkeit dadurch nennenswert beeinträchtigt wird.

Diese Aufgabe wird erfindungsgemäß dadurch gelöst, daß die Formkörper aus Polyestern bestehen, die aus Resten aufgebaut sind, welche sich von folgenden Monomeren herleiten:

A. organische Dicarbonsäure und

B.

a. 97,5 bis 100 Mol-% Alkandiol sowie

b. 0 bis 2,5 Mol-% 2-Butendiol-1.4

und daß sie nach dem Verformen einer Behandlung mit ionisierenden Strahlen unterworfen worden sind.

Die Polyester werden durch Veresterung oder Umesterung und anschließende Polykondensation von organischen Dicarbonsäuren oder deren polyesterbildenden Derivaten sowie dem entsprechenden Diolgemisch in Gegenwart von Katalysatoren hergestellt (Sorenson und Campbell, **Preparative Methods of Polymer Chemistry**, Interscience Publishers Inc., (N. Y.), 1961, Seiten 111 bis 127; **Kunststoff-Handbuch**, Band VIII, C. Hanser Verlag München, 1973; J. Polym. Sci., Part A 1, $\underline{4}$, Seiten 1851 bis 1859, 1966).

Die Reaktionstemperaturen liegen im Bereich von 160 bis 350 °C, vorzugsweise im Bereich von 170 bis 280 °C. Die genannte Reaktion wird unter weitgehendem Ausschluß von Sauerstoff durchgeführt. Aus diesem Grunde wird in einer Inertgasatmosphäre gearbeitet. Als Inertgas eignen sich z. B. Edelgase, Stickstoff, Kohlendioxid etc. Es wird bei Normaldruck oder im Vakuum gearbeitet. Bevorzugt wird die Polykondensationsstufe im Vakuum durchgeführt.

Als organische Dicarbonsäure werden (cyclo)aliphatische und aromatische Säuren, ggf. auch im Gemisch, eingesetzt. Sie weisen 2 bis 36, vorzugsweise 4 bis 18 C-Atome im Kohlenstoffgerüst auf.

Als (cyclo)aliphatische Säuren seien beispielsweise 1.4-Cyclohexandicarbonsäure, Adipinsäure, Sebacinsäure, Azelainsäure, Decandicarbonsäure und Dimerfettsäuren genannt; als aromatische Säuren kommen hauptsächlich Phthalsäure, Isophthalsäure, Naphthalindicarbonsäure und insbesondere Terephthalsäure in Frage. Die Säuren können jeweils einzeln oder auch im Gemisch eingesetzt werden. Anstelle der freien Säuren können mit Vorteil auch deren Derivate, wie z. B. Ester, insbesondere Methylester, eingesetzt werden.

Die Diolkomponente B. a. wird durch Alkandiole mit 2 bis 12 C-Atomen in der Kohlenstoffkette gebildet. Bevorzugt sind hierbei Ethylenglykol, Butandiol-1.4 und Hexandiol-1.6.

Bis zu 50 Mol-% der Alkandiolkomponente des Polyesters können durch andere Diole, wie beispielsweise Neopentylglykol, 1.4- bzw. 1.3-Dimethylolcyclohexan oder deren Gemisch ersetzt sein.

Das 2-Butendiol-1.4 wird bevorzugt in Mengen von 0,1 bis 2,5 Mol-% und ganz besonders bevorzugt in Mengen von 0,2 bis 2,0 Mol-% eingesetzt.

Unter den Begriff Polyester werden auch Blockcopolyester gerechnet. Derartige Produkte werden z. B. in **Chimia** $\underline{28}$ (9), Seiten 544 bis 552 (1974) und in **Rubber Chemistry and Technology** $\underline{50}$, Seiten 688 bis 703 (1977) beschrieben. Diese Blockcopolyester enthalten neben den obengenannten aromatischen Dicarbonsäuren und Diolen ein Poly(oxialkylen)diol mit einem Molgewicht im Bereich von etwa 600 bis 2 500. Bevorzugte Poly(oxialkylen)diole sind Poly(oxiethylen)diol, Poly(oxipropylen)diol und Poly-(oxitetramethylen)diol. Der Anteil der Poly(oxialkylen)diole liegt im Bereich von 4 bis 40 Gew.-%, vorzugsweise von 10 bis 35 Gew.-% (bezogen auf den gesamten Blockcopolyester).

Nach Beendigung der Polykondensation weisen die Polyester eine Viskositätszahl im Bereich von 50 bis 200 cm$^3$/g, vorzugsweise 70 bis 180 cm$^3$/g, auf.

Die zur Herstellung der erfindungsgemäßen Formkörper eingesetzten Formmassen können noch Hilfs- und Zusatzstoffe enthalten. Hierfür kommen z. B. Nucleierungs-, Mattierungs-, Fließmittel, Photoinitiatoren oder andere Verarbeitungshilfsmittel sowie Pigmente, Füll- und Verstärkungsstoffe in Frage.

Nucleierungs-, Mattierungs-, Fließmittel, Photoinitiatoren oder andere Verarbeitungshilfsmittel können in Mengen bis zu 6 Gew.-%, bevorzugt von 0,2 bis 3,5 Gew.-%, in den Formmassen enthalten sein.

Pigmente, Füll- und Verstärkungsstoffe sind in Mengen bis zu 60 Gew.-%, bevorzugt von 1 bis 50 Gew.-%, in den Formmassen enthalten.

Die erfindungsgemäßen Formkörper können auf üblichen Maschinen, z. B. im Spritzguß oder durch Extrusion, hergestellt werden.

Zu Formkörpern gemäß der Erfindung werden nicht nur Formteile mit ausgeprägter Dreidimensionalität, sondern auch Filme, Folien, Fasern etc. gezählt.

Die Formkörper werden als Spritzgußteile, Hohlkörper, Rohre, Kabelummantelung usw. eingesetzt.

Nach der Formgebung werden die erhaltenen Formkörper einer Behandlung mit ionisierenden Strahlen unterworfen. Für diesen Arbeitsgang werden marktübliche Quellen für $\beta$- oder $\gamma$-Strahlen eingesetzt. So können als $\beta$-Strahlenquelle Elektronenstrahlbeschleuniger mit einer Leistung von 150 kV bis 5 MV und als $\gamma$-Strahlenquellen z. B. Co$^{60}$- bzw. Cs$^{137}$-Präparate mit hoher Strahlungsleistung verwendet werden.

Die eingestrahlte erforderliche Dosis für die $\beta$- bzw. $\gamma$-Strahlung liegt zweckmäßigerweise im Bereich von 1 bis 2 000 kGy, vorzugsweise im Bereich von 50 bis 800 kGy. Falls der verwendete Polyester kein 2-Butendiol-1.4 als Comonomer enthält, muß die eingestrahlte Dosis mindestens 200 kGy betragen.

Die erfindungsgemäßen Formkörper weisen eine Reihe von Vorteilen auf:

- Obgleich nur geringe Anteile an ungesättigtem Diol im Polyester enthalten sind, besitzen die Formkörper nach ihrer Bestrahlung hervorragende mechanische Eigenschaften, wie hohe Schlagzähigkeit, Streckdehnung, Zugfestigkeit etc.
- Bereits mit einer geringen Strahlendosis werden diese guten mechanischen Eigenschaften erreicht.
- Nach Gebrauch können die Formkörper problemlos einem sinnvollen Recycling zugeführt werden.

Die angeführten Parameter wurden mit Hilfe der nachstehend genannten Meßverfahren bestimmt:

Die **Bestimmung der Viskositätszahl** (J-Wert) erfolgte an Lösungen von 0,5 g Polyester in 100 ml Phenol/o-Dichlorbenzol (Gewichtsverhältnis von 1 : 1) bei 25 °C (DIN 16 779).

Der Zugversuch zur **Bestimmung von Streckspannung**, **Streckdehnung und Zugfestigkeit** wurde an bestrahlten Probekörpern entsprechend DIN 53 455 durchgeführt. Die Bestimmung der Schlagzähigkeit erfolgte entsprechend ISO 180 1U. Die Wärmeformbeständigkeit der erfindungsgemäßen Probekörper wurde nach DIN 53 461, Prüfmethode B bestimmt.

Die mit Buchstaben gekennzeichneten Versuche sind nicht erfindungsgemäß.

## Beispiele

### Herstellung der Polyesterformmassen

Die Zusammensetzung der Polyesterformmassen ist in Tabelle 1 angegeben. Die Polyester wurden durch Umesterung und anschließender Polykondensation von Dimethylterephthalat mit dem aufgeführten Diolgemisch unter Verwendung von iso-Propyltitanat als Katalysator in bekannter Weise hergestellt.

### Herstellung der Probekörper

Die Herstellung der Probekörper für die mechanischen und thermischen Eigenschaftsprüfungen erfolgte im Spritzgießverfahren bei Verarbeitungstemperaturen von 240 bis 260 °C und Formtemperaturen von 60 bis 80 °C. Anschließend wurden die Probekörper einer $\beta$-Strahlung mit den in Tabelle 1 angeführten Strahlungsdosen unterworfen. Die Ergebnisse der Prüfung sind in der Tabelle 2 wiedergegeben.

Tabelle 1

| Beispiel | Diolkomponente [Mol-%] | | Diolkomponente [Gew.-%] bezogen auf Gesamtmasse des Polyesters | | Strahlungs-intensität |
|---|---|---|---|---|---|
| | B1D*) | B2D**) | B1D*) | B2D**) | [kGy] |
| A | 97,5 | 2,5 | 38,025 | 0,975 | - |
| 1 | 97,5 | 2,5 | 38,025 | 0,975 | 100 |
| 2 | 97,5 | 2,5 | 38,025 | 0,975 | 200 |
| 3 | 97,5 | 2,5 | 38,025 | 0,975 | 400 |
| B | 99 | 1 | 38,61 | 0,39 | - |
| 4 | 99 | 1 | 38,61 | 0,39 | 100 |
| 5 | 99 | 1 | 38,61 | 0,39 | 200 |
| 6 | 99 | 1 | 38,61 | 0,39 | 400 |
| C | 99,5 | 0,5 | 38,805 | 0,195 | - |
| 7 | 99,5 | 0,5 | 38,805 | 0,195 | 400 |
| D | 100 | - | 39 | - | - |
| 8 | 100 | - | 39 | - | 200 |
| 9 | 100 | - | 39 | - | 400 |
| 10 | 100 | - | 39 | - | 600 |
| 11 | 100 | - | 39 | - | 1 000 |

*) 1.4-Butandiol

**) 2-Buten-1.4-diol

**Patentansprüche**

1. Formkörper auf Basis hochmolekularer Polyester, die olefinische Doppelbindungen aufweisen, dadurch gekennzeichnet,

Tabelle 2

| Eigenschaften | Beispiel | | | | | | | | | | | | | | |
|---|---|---|---|---|---|---|---|---|---|---|---|---|---|---|---|
| | A | 1 | 2 | 3 | B | 4 | 5 | 6 | C | 7 | D | 8 | 9 | 10 | 11 |
| Streckspannung [MPa] | 56 | 58 | 59 | 62 | 56 | 58 | 60 | 60 | 57 | 60 | 56 | 59 | 61 | 62 | 63 |
| Streckdehnung [%] | 3,6 | 4,2 | 6,1 | 5,9 | 3,6 | 4,2 | 8,4 | 7,7 | 3,6 | 7,8 | 4,0 | 4,3 | 8,7 | 8,2 | 8 |
| Zugfestigkeit [MPa] | 29 | 37 | 33 | 47 | 29 | 37 | 56 | 53 | 29 | 42 | 29 | 36 | 40 | 45 | 57 |
| Schlagzähigkeit [kJ/m²] 23 °C | 148 | 149 | 154 | 163 | 94 | 149 | 141 | 135 | 149 | 141 | 148 | **) | **) | **) | **) |
| 0 °C | 147 | 149 | 145 | 164 | 102 | 153 | 149 | 136 | 149 | 141 | 152 | 146 | 140 | 85 | 98 |
| Wärmeformbeständigkeit [°C] | 138 | 145 | 153 | 155 | 138 | 142 | 152 | 153 | 139 | 149 | 138 | 139 | 142 | 150 | 154 |
| J-Wert [ml/g] | 99 | 125 | 150 | 196 *) | 100 | 118 | 145 | 183 *) | 99 | 128 | 103 | 108 | 109 | 118 | 148 |

*) Geringfügiger Mikrogelanteil

**) nicht bestimmt

5

daß die Polyester aus Resten aufgebaut sind, welche sich von folgenden Monomeren herleiten:

A. organische Dicarbonsäure und

B.

   a. 97,5 bis 100 Mol-% Alkandiol sowie

   b. 0 bis 2,5 Mol-% 2-Butendiol-1.4

und daß sie nach dem Verformen einer Behandlung mit ionisierenden Strahlen unterworfen worden sind, wobei in den Fällen, in denen der Polyester kein 2-Butendiol-1.4 als Comonomer enthält, die eingestrahlte Dosis mindestens 200 kGy beträgt.

2. Formkörper gemäß Anspruch 1,
dadurch gekennzeichnet,
daß sie in der Komponente B. b. 0.1 bis 2,5 Mol-% 2-Butendiol-1.4 enthalten.

3. Formkörper gemäß den Ansprüchen 1 oder 2,
dadurch gekennzeichnet,
daß sie mit $\beta$-Strahlung als ionisierender Strahlung behandelt worden sind.

4. Formkörper gemäß den Ansprüchen 1 oder 2,
dadurch gekennzeichnet,
daß sie mit $\gamma$-Strahlung als ionisierender Strahlung behandelt worden sind.

5. Formkörper gemäß einem der Ansprüche 1 bis 4,
dadurch gekennzeichnet,
daß sie mit $\beta$- bzw. $\gamma$-Strahlung mit einer Dosis von 1 kGy bis 2 000 kGy behandelt worden sind.

6. Verwendung der Formkörper gemäß einem der Ansprüche 1 bis 5 als Profile, Rohre, Hohlkörper sowie Formteile hergestellt nach dem Spritzguß- oder Extrusionsverfahren.

7. Verwendung der Formkörper gemäß einem der Ansprüche 1 bis 5 als Folien oder Ummantelungen.

8. Verwendung der Formkörper gemäß einem der Ansprüche 1 bis 5 als Fasern.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | DATABASE WPI<br>Week 7409<br>Derwent Publications Ltd., London, GB;<br>AN 74-16520V<br>& JP-A-49 005 890 (SEKISUI CHEMICAL CO LTD) , 9.Februar 1974<br>* Zusammenfassung *<br>--- | 1,3,4,7 | C08G63/88<br>B29C71/04 |
| A | PATENT ABSTRACTS OF JAPAN<br>vol. 005 no. 156 (C-074) ,6.Oktober 1981<br>& JP-A-56 086933 (YOSHINO KOGYOSHO CO LTD) 15.Juli 1981,<br>* Zusammenfassung *<br>--- | 1-8 | |
| D,A | EP-A-0 559 072 (BASF AG)<br>----- | | |
| | | | **RECHERCHIERTE SACHGEBIETE (Int.Cl.6)** |
| | | | C08G<br>B29C<br>C08J |

Der vorliegende Recherchenbericht wurde für alle Patentansprüche erstellt

| Recherchenort | Abschlußdatum der Recherche | Prüfer |
|---|---|---|
| DEN HAAG | 24.Mai 1995 | Decocker, L |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
······························································
& : Mitglied der gleichen Patentfamilie, übereinstimmendes Dokument